# EUROPÄISCHE PATENTSCHRIFT

(11) **EP 3 545 261 B1**
(45) Veröffentlichungstag und Bekanntmachung des Hinweises auf die Patenterteilung: **28.01.2026**
(21) Anmeldenummer: 17804189.3
(22) Anmeldetag: 27.11.2017
(51) Int. Cl.: G01B 21/16, F03D 17/00, H02K 11/215, H02K 7/18

(54) **MESSSYSTEM UND EIN MESSVERFAHREN ZUM VERMESSEN EINES STATORS EINER GETRIEBELOSEN WINDENERGIEANLAGE**
MEASURING SYSTEM AND A MEASURING METHOD FOR THE MEASUREMENT OF A STATOR OF A GEARLESS WIND TURBINE
PROCÉDÉ DE MESURE ET SYSTÈME DE MESURE POUR MESURER UN STATOR D'ÉOLIENNE À ENTRAÎNEMENT DIRECT

(30) Priorität: 28.11.2016 DE 102016122862
(43) Veröffentlichungstag der Anmeldung: 02.10.2019
(73) Patentinhaber: Wobben Properties GmbH, 26607 Aurich (DE)
(72) Erfinder: KRAUSE, Uli, 26556 Westerholt (DE); ROSENBUSCH, Peter, 92500 RUEIL-MALMAISON (FR); SCHLÜTER, Rainer, 26607 Aurich (DE)
(74) Vertreter: Eisenführ Speiser
(86) Internationale Anmeldenummer: PCT/EP2017/080477
(87) Internationale Veröffentlichungsnummer: WO 2018/096134

(56) Entgegenhaltungen:
- EP-A1- 1 835 293
- EP-A1- 1 835 293
- EP-A2- 0 067 643
- EP-A2- 0 067 643
- US-A1- 2008 164 697
- US-A1- 2008 164 697
- US-A1- 2009 015 248
- US-A1- 2009 015 248
- US-A1- 2010 102 846
- US-A1- 2010 102 846
- US-A1- 2014 239 974
- US-A1- 2014 239 974
- US-A1- 2014 356 162
- US-A1- 2015 292 857
- US-A1- 2015 292 857
- VIBROSYSTM: "AGMS: generator diagnostics through on-line air gap monitoring", INTERNET CITATION, 26 April 2001 (2001-04-26), XP002166127, Retrieved from the Internet <URL:www.vibrosystm.com/frhdroe.html> [retrieved on 20010426]
- VIBROSYSTM: "AGMS: generator diagnostics through on-line air gap monitoring", INTERNET CITATION, 26 April 2001 (2001-04-26), XP002166127, Retrieved from the Internet <URL:www.vibrosystm.com/frhdroe.html> [retrieved on 20010426]

## Beschreibung

Die Erfindung betrifft ein Messsystem und ein Messverfahren zum Vermessen eines Stators einer getriebelosen Windenergieanlage.

Bei einer getriebelosen Windenergieanlage umfasst ein Generator der Windenergieanlage einen Läufer, der direkt und ohne übersetzendes Getriebe über eine Drehung der mit dem aerodynamischen Rotor verbundenen Rotorblätter bewegt wird. Eine Möglichkeit der Auslegung ist als Innenläufer, derart, dass der Rotor innerhalb des Stators rotiert. In dieser Auslegung wird der Läufer häufig stirnseitig, d.h. von einer Seite, die im Regelbetrieb im Wesentlichen in den Wind gerichtet ist, in den Stator eingeführt.

Zwischen Rotor und Stator befindet sich ein Luftspalt, der nach Möglichkeit über den Umfang des Rotors bzw. des Stators eine gleichmäßige Dicke, d.h. eine Ausdehnung in Radialrichtung um die Generatorachse, aufweist.

Hierfür ist es nötig, dass der Stator eine möglichst runde Innenfläche bereitstellt, innerhalb welcher der Rotor eingepasst werden kann. Um die Rundheit des Stators sicherzustellen ist bislang bei der Montage der Windenergieanlage ein aufwändiges Verfahren erforderlich, bei dem die Windenergieanlage in viele Rotorpositionen verfahren und festgesetzt wird. In jeder dieser Rotorpositionen wird der Abstand zwischen einem festen Referenzpunkt des Rotors und einem der jeweiligen Rotorposition entsprechenden variablen Punkt des Stators manuell bestimmt. Zur manuellen Bestimmung steigt ein Techniker in die Rotornabe, weshalb die Anlage dann festgesetzt sein muss. Nachdem der Techniker im Anschluss an die Messung den Bereich der Rotornabe verlassen hat, kann der Rotor in die nächste Messposition verfahren und erneut vermessen werden.

Das bekannte Verfahren weist mehrere Nachteile auf. Beispielsweise ist unvorteilhaft und zeitaufwändig, dass die Windenergieanlage häufig angefahren und festgesetzt werden muss, da ein Techniker zu mehreren Zeitpunkten in die Rotornabe bzw. auf die dem Spinner zugewandte Seite des Generators gelangen muss. Auch wird keine Möglichkeit der Bestimmung der Position in Umfangsrichtung des Stators geschaffen, zu der bestimmte Messwerten zuordenbar sind. Schließlich ist nicht möglich, dass Auswirkungen eines Einstellens bzw. Justierens des Stators direkt und unmittelbar messbar sind.

Die Druckschrift US 2010/0102846 A1 beschreibt eine Vorrichtung mit einer Recheneinheit, die eingerichtet ist, ein Datensignal zu empfangen, wobei das Datensignal indikativ für einen Spalt zwischen einem Sensor und einer Fläche eines Rotors oder Stators ist, der relativ zu dem Sensor rotiert. Die Recheneinheit ist zudem eingerichtet, Programmcode auszuführen, gemäß dem eine Mehrzahl niedrigster Werte des Datensignals über einen Umlauf der relativen Rotation zwischen dem Rotor und dem Stator definiert werden. Die Mehrzahl niedrigster Werte werden zum Feststellen einer Distanz zwischen dem Sensor und der Fläche des Rotors oder Stators angezeigt, um eine Position des Rotors relativ zum Stator zu bestimmen.

Die Druckschrift US 2015/0292857 A1 bezieht sich auf ein System, das vier kapazitive Sensoren aufweist, von denen jeder um eine Längsachse angeordnet ist. Ein erster der kapazitiven Sensoren ist entlang einer ersten zu der Längsachse radialen Achse angeordnet und ein dritter der kapazitiven Sensoren ist entlang der ersten Achse gegenüber von dem ersten kapazitiven Sensor angeordnet. Ein zweiter der kapazitiven Sensoren ist entlang einer zweiten zu der Längsachse radialen Achse angeordnet und ein vierter der kapazitiven Sensoren ist entlang der zweiten Achse gegenüber von dem zweiten kapazitiven Sensor angeordnet. Dabei ist die zweite Achse von der ersten Achse verschieden. Jeder der kapazitiven Sensoren ist eingerichtet, basierend zumindest teilweise auf einer jeweiligen Position einer rotierenden Komponente entlang derjeweiligen Achse relativ zur Längsachse ein jeweiliges Signal zu senden.

Die Druckschrift US 2008/0164697 A1 betrifft einen Generator einer Windenergieanlage, der einen rotierenden Teil, einen stationären Teil und ein Luftspaltsteuersystem aufweist. Der stationäre Teil ist so angeordnet, dass dadurch ein Luftspalt zwischen einem Teilbereich des rotierenden Teils und einem Teilbereich des stationären Teils definiert ist. Der Luftspalt ist eingerichtet, die Übertragung eines steuerbaren magnetischen Flusses durch ihn hindurch zu ermöglichen. Das Steuersystem umfasst eine Luftspaltmessanordnung, einen Spannungswandler und eine Steuereinheit. Die Steuereinheit ist über eine elektronische Datenverbindung mit der Luftspaltmessanordnung und dem Spannungswandler gekoppelt und eingerichtet, eine Größe des Luftspalts durch Modulation des magnetischen Flusses zu modulieren.

Die Druckschrift US 2014/0239974 A1 beschreibt ein Messsystem zum kontaktlosen Messen einer Luftspaltdistanz zwischen einem an einem Gehäuse befestigten Pol und einem Kern eines Rotors. Das Messsystem weist einen Kapazitätssensor auf, der ein Signal erzeugt, das proportional ist zu einem gemessenen Luftspalt, und ein mit dem Kapazitätssensor verbundenes Anzeigegerät, das das Signal verarbeitet und die minimale Luftspaltdistanz anzeigt. Das Messsystem weist zudem eine Steuereinheit auf, mit der der Fortschritt der Messung verfolgt werden kann.

Die Druckschrift EP 1 835 293 A1 betrifft ein Verfahren zur Bestimmung mindestens eines Rotationsparameters eines mit einer Rotationsgeschwindigkeit und einer Phase rotierenden Windturbinenrotors. Das Verfahren umfasst die Schritte: i) Messen einer wirksamen Fliehkraft in einer ersten vorgegebenen Richtung, die in einem synchron mit dem Rotor rotierenden Koordinatensystem definiert ist, auf mindestens ein im oder am Rotor befindliches Referenzobjekt, ii) Festlegen einer ersten Winkelfrequenz, die die Rotationsgeschwindigkeit des Rotors darstellt, auf der Grundlage von Änderungen der gemessenen effektiven Zentrifugalkraft aufgrund der Gravitationskraft Fg, iii) Festlegen einer zweiten Winkelfrequenz, die die Rotationsgeschwindigkeit des Rotors repräsentiert, unter Verwendung von mindestens einem Gierratenkreisel, und iv) Festlegen des Wertes der Rotationsgeschwindigkeit als Rotationsparameter durch Korrektur der zweiten Winkelfrequenz durch Vergleich mit der ersten Winkelfrequenz.

Die Druckschrift US 2009/0015248 A1 betrifft einen Abtastmechanismus, der eine Magnetquelle, einen Magnetflusssensor, eine Sensorhalterung, auf welcher die Magnetquelle und der Magnetflusssensor montiert sind, und ein ferromagnetsches Ziel aufweist. Die Magnetquelle, der Magnetflusssensor und das ferromagnetische Ziel sind angeordnet, um einen magnetischen Kreis von der Magnetquelle zu dem Ziel, von dem Ziel zu dem Sensor und zurück zu der magnetischen Quelle durch die Halterung auszubilden.

Die Druckschrift US 2014/0356162 A1 beschreibt ein Verfahren zur Steuerung einer Windkraftanlage, wobei die Windkraftanlage eine elektrische Maschine aufweist, die ihrerseits einen Stator, einen Rotor der um eine Drehachse in Bezug auf den Stator drehbar ist, und eine mechanische Lageranordnung, die so konfiguriert ist, dass sie den Rotor drehbar mit dem Stator zu koppeln; wobei der Stator mindestens eine Wicklung zum elektromagnetischen Zusammenwirken mit dem Rotor aufweist; und wobei das Steuerungsverfahren die folgenden Schritte umfasst: Schätzen von mindestens einer Größe, ausgewählt aus einer Gruppe, die einen Abstand zwischen dem Rotor und dem Stator, der zeitlichen Veränderung des Abstandes und eines Versatzes zwischen dem Rotor und dem Stator; Definieren einer lokalisierten zusätzlichen Magnetkraft als eine Funktion der ausgewählten Größe; und Regulieren der ausgewählten Größe unter Verwendung der definierten lokalisierten zusätzlichen Magnetkraft.

Vor diesem Hintergrund war es eine Aufgabe der vorliegenden Erfindung, ein Messsystem und zugehöriges Messverfahren bereitzustellen, das zumindest einige dieser bekannten Probleme löst und Nachteile vermeidet. Insbesondere war es eine Aufgabe, ein Messsystem und zugehöriges Messverfahren bereitzustellen, das eine vereinfachte Vermessung eines Stators ermöglicht.

Erfindungsgemäß wird ein Messsystem zum Vermessen eines Stators einer getriebelosen Windenergieanlage gemäß Anspruch 1 vorgeschlagen.

Das erfindungsgemäße Messsystem ist somit vor Beginn der Messung in der Windenergieanlage montierbar und ist dazu eingerichtet, den Luftspalt während der Drehung des Rotors zu erfassen. Somit entfällt die Notwendigkeit, den Rotor an mehreren Positionen in Umfangsrichtung festzusetzen und den Luftspalt dann manuell zu erfassen bzw. zu vermessen. Dies wird dadurch ermöglicht, dass sich die Luftspaltmesseinheit und die Lagebestimmungseinheit zusammen mit dem Rotor drehen, da sie an dem Rotor montiert werden.

Dadurch, dass auch die Lagebestimmungseinheit an dem Rotor montierbar ist und sich somit ebenso wie die Luftspaltmesseinheit mit dem Rotor dreht, ist ein einfacher Anschluss der Luftspaltmesseinheit an der Lagebestimmungseinheit möglich. Insbesondere kann es durch die Rotation des Rotors nicht zu Verdrillungen oder Ähnlichem eines Verbindungskabels zwischen Lagebestimmungseinheit und Luftspaltmesseinheit kommen.

Vorzugsweise ist der Luftspalt zwischen einem Polschuh auf Rotorseite und einem Statorring auf Statorseite ausgebildet. In anderen Ausgestaltungen der Windenergieanlage bzw. des Generators kann der Luftspalt auch zwischen anderen Elementen auf Seite des Stators und auf Seite des Rotors ausgebildet sein.

Das erfindungsgemäße Messsystem ist tragbar und wiederverwendbar, indem die Luftspaltmesseinheit und die Lagebestimmungseinheit an dem Rotor reversibel montierbar sind.

Vorzugsweise ist die Haltevorrichtung weiter dazu eingerichtet, die Messeinheit alternativ an dem Stator der Windenergieanlage zu montieren. Auch in dieser Position ist der Abstandssensor dazu eingerichtet, das für eine Ausdehnung des Luftspalts indikative Signal bereitzustellen. Während einer Drehung des Rotors kann die Auswerteeinheit somit den Abstand zwischen einer festen Position des Stators und verschiedenen Positionen des Rotors erfassen und eine Rotorrundlaufmessung durchführen. Das erfindungsgemäße Messsystem eignet sich somit sowohl zur Messung des Stators als auch zur Messung des Rundlaufs des Rotors. Auch bei der Rotorrundlaufmessung entfällt die Notwendigkeit, den Rotor an mehreren Positionen festzusetzen, um den Luftspalt manuell erfassen zu können. In dieser Ausführungsform kann der Abstandssensor somit ein für einen Abstand zwischen Stator und vorzugsweise den Polschuhen auf Seiten des Rotors indikatives Signal bereitstellen. In einem Zwischenraum zwischen zwei benachbarten Polschuhen ist ein größerer Abstand detektierbar, so dass über die Auswertung des zeitlichen Verlaufs des Abstands die verschiedenen Polschuhe des Rotors erkennbar sind. In einer Ausführungsform wird dem Messsystem vorzugsweise die Anzahl der Polschuhe des Rotors vorgegeben, so dass die relative Position des Rotors in Umlaufrichtung durch Zählen der Polschuhe anhand des Messsignals des Abstandssensors möglich ist. In dieser Ausführung, die nicht Teil der Erfindung ist, wird somit vorzugsweise nicht notwendigerweise eine an dem Rotor montierte Lagebestimmungseinheit benötigt, da die Rotorposition aus der Zählung der Polschuhe bestimmt werden kann. Vorzugsweise wird der Rotorrundlauf über ein Minimum des Abstands je Polschuh bestimmt. In anderen Ausführungsformen ist der Rotorrundlauf aber auch mit von dem Minimum verschiedenen Werten, beispielsweise mit einem Mittelwert, messbar. Beispielsweise weist der Rotor in einem Fall einer Enercon E-115-Anlage in Umlaufrichtung 96 Polschuhe auf. Auch sind andere Anzahlen von Polschuhen für andere Windenergieanlagen bekannt.

Erfindungsgemäß umfasst die Haltevorrichtung eine Magnetfolie, wobei die Luftspaltmesseinheit dazu eingerichtet ist, in dem Luftspalt, insbesondere auf einem Polschuh des Rotors, montiert zu werden. Die Magnetfolie ermöglicht, dass die Luftspaltmesseinheit reversibel montierbar ist und für mehrere Einsätze wiederverwendbar ist.

In einer Ausführungsform weist die Magnetfolie eine Dicke von etwa 0,3 mm auf, die in anderen Ausführungsformen aber auch anders ausgelegt sein kann, wobei der Halt der Luftspaltmesseinheit an dem Rotor gewährleistet wird.

Die Lagebestimmungseinheit weist ein Gyroskop und alternativ oder zusätzlich einen Inkrementalgeber auf. Das Gyroskop ist dazu eingerichtet, ein für die Lage des Rotors indikatives Signal bereitzustellen. Das Gyroskopsignal kann mit einer hohen Abtastrate erfasst werden und somit eine hohe Auflösung sicherstellen. Vorzugsweise stimmt die Abtastrate der Lagebestimmungseinheit dann mit der Abtastrate der Luftspaltmesseinheit überein und korrespondierende Luftspalt und Lagewerte können erfasst werden.

Der Inkrementalgeber ist dazu eingerichtet, ein Signal je bestimmter Winkeländerung des Rotors bereitzustellen. Die Lagebestimmungseinheit ist somit vorzugsweise dazu eingerichtet, das Signal des Abstandssensors je von dem Inkrementalgeber angegebene bestimmte Winkeländerung des Rotors zu erfassen.

Vorzugsweise weist der Inkrementalgeber eine Auflösung von mindestens 100 Positionen je Umlauf auf. Die Auflösung des Inkrementalgebers ist bekannt und vorzugsweise sind die einzelnen Positionen voneinander gleich beabstandet, so dass die Position der einzelnen Messpunkte einfach bestimmbar ist. Eine hohe Auflösung ermöglicht eine vorteilhafte genaue Lokalisierung der erfassten Abstandswerte. Vorteilhaft ist demnach ebenfalls bekannt, wann ein gesamter Umlauf abgeschlossen ist und die Messung kann durch einen weiteren Umlauf einfach wiederholt werden.

Vorzugsweise weist die Lagebestimmungseinheit eine Referenzierungseinheit zur Referenzierung des Inkrementalgebers auf. Durch die Referenzierung ist nicht nur die relative Lage, die durch den Inkrementalgeber zwischen zwei Messpunkten bekannt ist, sondern die absolute Lage möglich. Beispielsweise kann die Referenzierungseinheit ein Pendel umfassen, bei dem eine 12-Uhr Position erkennbar ist. Anders ausgedrückt, die Luftspaltmesseinheit wird beispielsweise in der 12-Uhr Position, d.h. an der Position des Rotors, die in vertikaler Richtung am höchsten ist, montiert und der Inkrementalgeber dann derart referenziert, dass die Referenzierungseinheit ebenfalls dem Wert der 12-Uhr Position entspricht. Ebenso sind in anderen Ausführungsformen natürlich auch andere Referenzwert, die nicht der 12-Uhr Position entsprechen, möglich.

In einem Ausführungsbeispiel umfasst die Referenzierungseinheit ein Pendel, das derart eingerichtet ist, dass eine Lampe, beispielsweise eine LED, leuchtet, sobald sich die Referenzierungseinheit in der 12-Uhr Position befindet. Entsprechend kann in dieser Ausführungsform der Inkrementalgeber so lange eingestellt, beispielsweise gedreht, werden, bis die zu der Referenzierungseinheit gehörende LED leuchtet. Damit ist eine einfache Referenzierung möglich. In anderen Ausführungsformen sind natürlich auch andere Formen der Referenzierung des Inkrementalgebers möglich.

Vorzugsweise ist die Haltevorrichtung dazu eingerichtet, stirnseitig vor dem Rotor montiert zu werden. An der Stirnseite vor dem Rotor sind regelmäßig Löcher vorhanden, beispielsweise können Schrauben aus einem Luftblech gelöst werden und die Haltevorrichtung sogar mittels derselben Schrauben montiert werden. Dies gewährleistet eine einfache Montage der Luftspaltmesseinheit. In anderen Ausführungsformen kann die Haltevorrichtung auch alternativ oder zusätzlich, wenn das Messsystem mehrere Messeinheiten aufweist, auf der der Stirnseite abgewandten Seite des Rotors montiert werden.

Vorzugsweise weist das Messsystem ein Gehäuse auf. Das Gehäuse umfasst die Lagebestimmungseinheit und ist eingerichtet, an Streben für eine Spinnerkappe der Windenergieanlage montiert zu werden. Die Streben für die Spinnerkappe sind in der Windenergieanlage immer vorhanden, somit ist das Gehäuse und damit die Lagebestimmungseinheit ohne zusätzlichen Aufwand montierbar. Beispielsweise kann das Gehäuse mittels einfacher Kabelbinder oder ähnlicher Befestigungsmittel temporär an den Streben montiert werden.

In einer Ausführungsform umfasst das Gehäuse einen Magneten, insbesondere einen Permanentmagneten, wobei das Gehäuse mittels des Magneten an einem magnetischen Teil des Rotors lösbar montierbar ist.

In einer Ausführungsform können die Lagebestimmungseinheit und die Luftspaltmesseinheit auch in einem gemeinsamen Gehäuse angeordnet sein, das beispielsweise stirnseitig an dem Rotor montierbar ist.

Vorzugsweise weist die Lagebestimmungseinheit ein Funkkommunikationsmodul, insbesondere ein W-LAN-Modul, auf. Das Funkkommunikationsmodul ermöglicht eine einfache Verbindung zu einem Computer, beispielsweise in dem Maschinenhaus der Windenergieanlage, herzustellen, ohne dass hierfür Kabel zu verlegen sind. Somit ist eine einfache Analyse und Auswertung der Messung durch den Computer möglich, der nicht mit rotiert. Anders ausgedrückt können Einstellungen und Anpassungen des Stators demnach bereits während einer Drehung des Rotors und einer Aufnahme der Messergebnisse vorgenommen werden, da keine Anwesenheit von Technikern im Bereich der Rotornabe und ein damit verbundenes Festsetzen der Anlage von Nöten ist.

Vorzugsweise weist der Abstandssensor ein Tastblech auf, das dazu eingerichtet ist, im montierten Zustand eine Innenseite des Stators abzutasten. Insbesondere ist das Tastblech derart angeordnet, dass es an Statorblechpakete von innen anliegt. Auch andere Arten von Messvorrichtungen, beispielsweise optische wie laserbasierte, die zur Entfernungsbestimmung geeignet sind, können alternativ oder zusätzlich zu dem Tastblech verwendet werden. Ebenso ist der Abstandssensor analog auf einen Außenläufer übertragbar, wobei der Abstandssensor dann vorzugsweise die Außenseite des Stators ausgehend von dem umlaufenden Rotor abtastet.

Alternativ oder zusätzlich weist der Abstandssensor einen kapazitiven Flachsensor auf. Der kapazitive Flachsensor ist insbesondere eingerichtet, direkt in dem Luftspalt montiert zu werden und ein Signal bereitzustellen, das für eine Dicke des Luftspaltes indikativ ist.

Vorzugsweise ermöglicht der Abstandssensor eine Messgenauigkeit von 0,5 mm oder besser. Der Luftspalt hat trotz seines Durchmessers von beispielsweise größer als 4 m eine geringe Dicke von wenigen Millimetern. Dies macht eine derartige Genauigkeit erforderlich, da bereits Schwankungen in diesem Bereich große Auswirkungen haben können.

Vorzugsweise stellt der Abstandssensor ein analoges Abtastsignal bereit und die Lagebestimmungseinheit weist einen Analog- zu Digital-Wandler auf, der dazu eingerichtet ist, das Abtastsignal zu digitalisieren. Dies ermöglicht eine besonders einfache Ausgestaltung der Luftspaltmesseinheit. Alternativ kann in anderen Ausführungsformen auch die Luftspaltmesseinheit direkt einen digitalen Abstandssensor aufweisen.

Vorzugsweise weist die Lagebestimmungseinheit einen Transformator auf, damit die Lagebestimmungseinheit direkt an die Netzspannung anschließbar ist. Insbesondere wird somit ermöglicht, dass die Lagebestimmungseinheit bzw. das gesamte Messsystem ohne Schwierigkeiten an bestehende Versorgungsnetze, für die eine breite Verfügbarkeit gewährleistet ist, anschließbar ist. Beispielsweise sind im deutschen Markt 220 V Steckdosen - auf andere Märkte analog übertragbar - anzutreffen, die einen einfachen Anschluss ermöglichen. Besonders bevorzugt weist die Lagebestimmungseinheit einen ersten Transformator, der eine 24 V Ausgangsspannung für die gesamte Lagebestimmungseinheit bereitstellt, und alternativ oder zusätzlich einen zweiten Transformator auf, der eine 5 V Ausgangsspannung für den Abstandssensor bereitstellt.

Vorzugsweise weist das Messsystem eine erste und eine zweite Luftspaltmesseinheit auf, wobei die erste Luftspaltmesseinheit zur Montage in Axialrichtung vor dem Rotor und die zweite Luftspaltmesseinheit zur Montage in Axialrichtung hinter dem Rotor eingerichtet ist. Ein derartiges Messsystem ermöglicht, den Stator sowohl axial vorne als auch hinten basierend auf der Messung des Messsystems auszurichten. Zusätzlich zu der Ausrichtung in der Rotorebene kann somit auch eine Verkippung gegen die Rotorebene erkannt werden. Anders ausgedrückt wird vorzugsweise die erste Luftspaltmesseinheit spinnerseitig und die zweite Luftspalteinheit maschinenhausseitig auf dem gleichen Polschuh des Rotors montiert.

Obwohl die Ausgestaltungen jeweils unabhängig voneinander als bevorzugte Ausführungsformen beschrieben wurden, so ergeben sich besonders vorteilhafte Ausführungen des Messsystems durch die Kombination von zwei oder mehreren der als bevorzugt beschriebenen Ausführungsformen, solange die daraus resultierenden Ausführungsformen innerhalb des durch die beigefügten Ansprüche definierten Schutzumfangs bleiben.

In einem weiteren Aspekt wird ein Messverfahren zum Vermessen eines Stators einer getriebelosen Windenergieanlage gemäß Anspruch 11 bereitgestellt.

Das erfindungsgemäße Messverfahren wird vorzugsweise unter Verwendung des erfindungsgemäßen Messsystems durchgeführt und ist insbesondere dazu geeignet, die mit Bezug auf das Messsystem beschriebenen Vorteile zu erreichen. Sämtliche für das Messsystem beschriebenen vorteilhaften Ausgestaltungen sind in gleicher Form auch auf das Messverfahren übertragbar.

Vorzugsweise wird das Signal des Abstandssensors je Messposition, die von einem Inkrementalgeber angegeben wird, erfasst. Somit ergibt sich ein zusammengesetztes Bild der Veränderung des Luftspaltes über den Umfang des Stators. Beispielsweise können die Werte des Inkrementalgebers und des zugehörigen Wertes des Abstandssensors als Liste gespeichert und im weiteren Verlauf mittels geeigneter Software, beispielsweise einer Tabellenkalkulation, verarbeitet werden. Ferner können die Werte des Abstandssensors auch in einem Netzdiagramm dargestellt werden, wobei die kreisförmige Anordnung vorzugsweise der Umlaufrichtung entspricht. Dies ermöglicht eine grafisch einfache und intuitive Darstellung der Rundheit des Stators bzw. auch der Bereiche des Stators, an denen der Stator unrund und nachzujustieren ist.

Vorzugsweise umfasst das Verfahren ein Verbinden der Lagebestimmungseinheit mit einer Netzspannung. Vorzugsweise umfasst das Verfahren alternativ oder zusätzlich ein Kalibrieren des Abstandssensors.

Vorzugsweise umfasst das Verfahren ein Referenzieren eines Inkrementalgebers zur absoluten Lagebestimmung während eines Umlaufs. Damit kann zusätzlich zu der relativen Lageänderung, die durch den Inkrementalgeber angegeben wird auch die absolute Position zuverlässig erfasst werden.

Vorzugsweise umfasst das Verfahren ein Übertragen der erfassten Signale per W-LAN. Dies ermöglicht eine einfache Auswertung der Daten durch einen Techniker, der sich in dem nicht-rotierenden Teil der Windenergieanlage aufhält. Ferner muss zu diesem Zweck kein Kabel aus dem rotierenden Teil der Windenergieanlage in den drehfesten Teil verlegt werden. W-LAN eignet sich durch eine gute Verfügbarkeit und günstige Kosten besonders. Alternativ zu W-LAN sind natürlich aber auch andere Funkübertragungsprotokolle analog implementierbar.

In einem weiteren Aspekt wird ein Messverfahren zum Vermessen eines Rotors einer getriebelosen Windenergieanlage gemäß Anspruch 13 bereitgestellt.

In diesem Aspekt weist das Messverfahren die Lagebestimmungseinheit, die an dem Rotor montiert wird, auf, obwohl die Bestimmung der Lage bereits basierend auf den Polschuhen, die aus dem Messsignal ableitbar sind, erfolgen kann.

Vorzugsweise werden zwei Luftspaltmesseinheiten auf beiden axialen Seiten des Stators, nämlich gehäuseseitig und nabenseitig, montiert. Abweichungen zwischen gehäuseseitigem und nabenseitigem Abstandssensor können somit zur Korrektur einer Verkippung des Rotors gegenüber der Generatorachse eingesetzt werden. Natürlich kann das Messverfahren aber auch nur mit einer Luftspaltmesseinheit, die entweder gehäuseseitig oder nabenseitig montiert wird, oder mit mehr als zwei Luftspaltmesseinheiten durchgeführt werden.

In einem weiteren Aspekt wird ein Verfahren zum Montieren einer Windenergieanlage bereitgestellt, das ein Durchführen eines erfindungsgemäßen Messverfahrens und weiter ein Justieren des Stators und/oder des Rotors an einer Position, an der ein abweichender Wert des Luftspaltes gemessen wurde, umfasst. Unrunde Bereiche, die bei der Montage des Stators bzw. des Rotors anfallen, können hierdurch besonders einfach und mit geringem Aufwand korrigiert werden.

Weitere vorteilhafte Ausgestaltungen und Ausführungsformen werden im Folgenden mit Verweis auf beiliegende Figuren beschrieben. Hierbei zeigen:
- Fig. 1: schematisch eine Windenergieanlage,
- Fig. 2: schematisch einen Windpark,
- Fig. 3: schematisch einen Generator einer in Fig. 1 gezeigten Windenergieanlage,
- Fig. 4: schematisch ein Ausführungsbeispiel eines erfindungsgemäßen Messsystems,
- Fig. 5: ein beispielhaftes Flussdiagramm eines erfindungsgemäßen Messverfahrens,
- Fig. 6: ein weiteres beispielhaftes Flussdiagramm eines erfindungsgemäßen Messverfahrens und
- Fig. 7: schematisch ein Ausführungsbeispiel eines Abstandssensors.

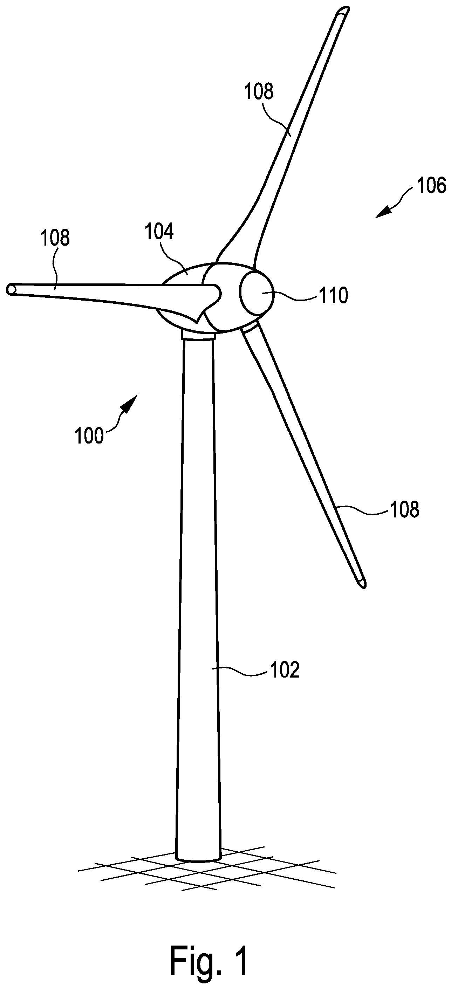

Fig. 1 zeigt eine schematische Darstellung einer Windenergieanlage 100. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt mit dem aerodynamischen Rotor 106 gekoppelt ist. Der elektrische Generator ist in der Gondel 104 angeordnet und erzeugt elektrische Energie.

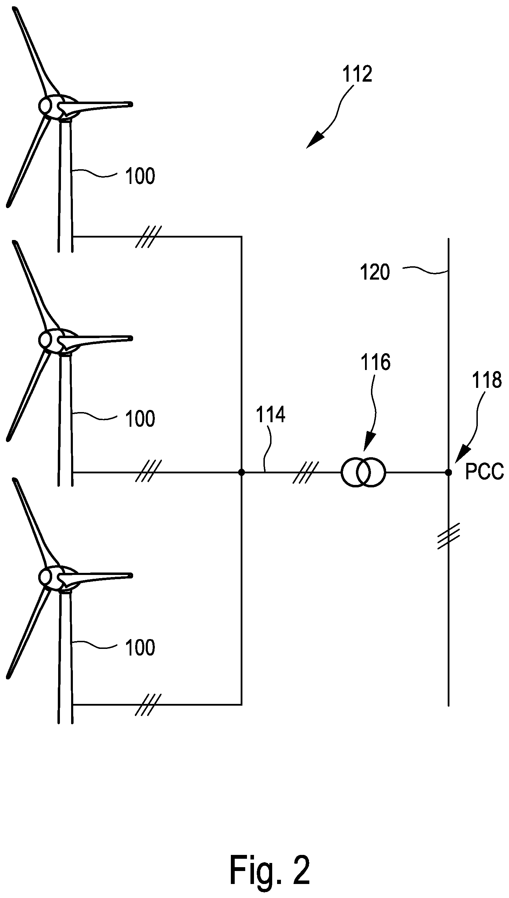

Fig. 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

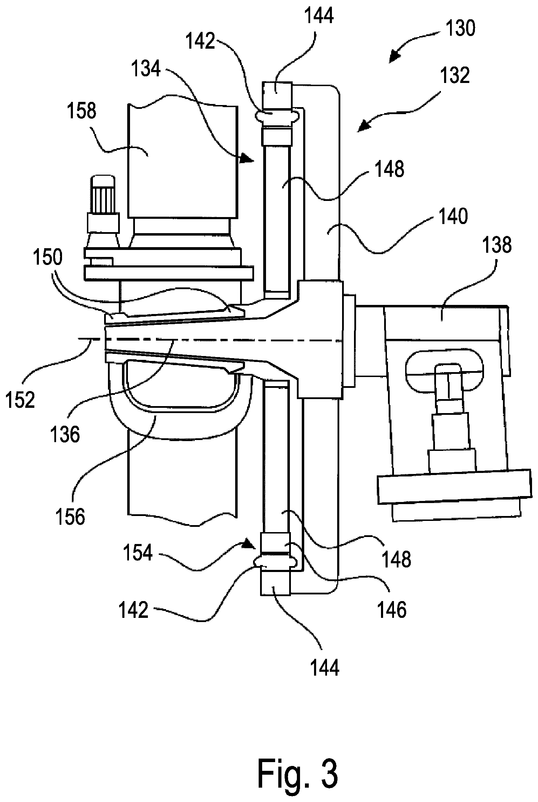

Fig. 3 zeigt einen Generator 130 schematisch in einer Seitenansicht. Er weist einen Stator 132 und einen dazu drehbar gelagerten elektrodynamischen Rotor 134 auf und ist mit seinem Stator 132 über einen Achszapfen 136 an einem Maschinenträger 138 befestigt. Der Stator 132 weist einen Statorträger 140 und Statorblechpakete 142 auf, die Statorpole des Generators 130 bilden und über einen Statorring 144 an dem Statorträger 140 befestigt sind. Der elektrodynamische Rotor 134 weist Rotorpolschuhe 146 auf, die die Rotorpole bilden und über einen Rotorträger 148 und Lager 150 auf dem Achszapfen 136 drehbar um die Drehachse 152 gelagert sind. Die Statorblechpakete 142 und Rotorpolschuhe 146 trennt nur ein schmaler Luftspalt 154, der wenige Millimeter dick ist, insbesondere weniger als 6 mm, aber einen Durchmesser von mehreren Metern aufweist, insbesondere mehr als 4 m. Die Statorblechpakete 142 und die Rotorpolschuhe 146 bilden jeweils einen Ring und sind zusammen auch ringförmig, so dass der Generator 130 ein Ringgenerator ist. Bestimmungsgemäß dreht sich der elektrodynamische Rotor 134 des Generators 130 zusammen mit der Rotornabe 156 des aerodynamischen Rotors, von dem Ansätze von Rotorblättern 158 angedeutet sind.

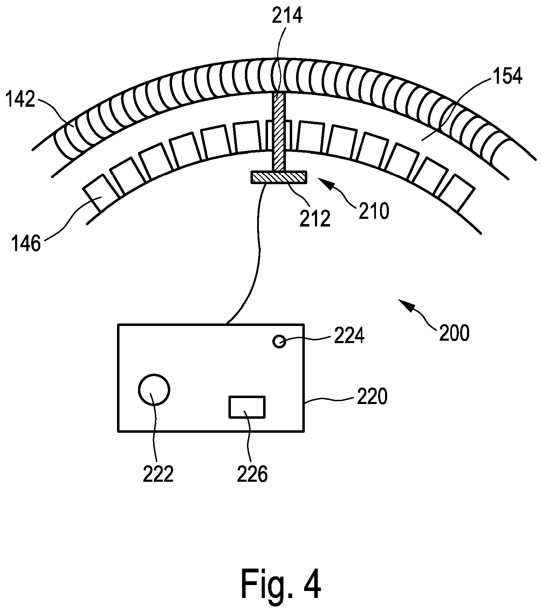

Fig. 4 zeigt schematisch ein Ausführungsbeispiel eines erfindungsgemäßen Messsystems 200 zum Vermessen eines Stators 132 eines Generators 130, wie er in Fig. 3 gezeigt ist. Fig. 4 zeigt den in Fig. 3 gezeigten Stator von vorne, genauer einen Ausschnitt des oberen Teils der Statorblechpakete 142 und der Rotorpolschuhe 146. Zur Vereinfachung der Darstellung sind die weiteren, in Fig. 3 angedeuteten Elemente, weggelassen.

Das Messsystem 200 weist eine Luftspaltmesseinheit 210 und eine Lagebestimmungseinheit 220 auf.

Die Luftspaltmesseinheit 210 umfasst eine Haltevorrichtung 212, die zugleich zur Montage an dem Rotor und zur Halterung eines Abstandssensors 214 eingerichtet ist. Die Haltevorrichtung 212 kann beispielsweise mittels zweiter Schrauben an einem Luftblech auf der Stirnseite des Rotors 134 (vgl. Fig. 3) montiert werden. Das Luftblech (nicht gezeigt) ist natürlich nur ein Beispiel, an den die Luftspaltmesseinheit 210 montiert ist. Der Vorteil des Luftbleches ist, dass es gewöhnlicherweise in den Windenergieanlagen bereits vorhanden ist und auch Löcher, die zum Montieren der Haltevorrichtung geeignet sind, bereithält. Der Abstandssensor 214 weist in diesem Ausführungsbeispiel ein Halteblech auf und bestimmt den Abstand zwischen Statorblechpaketen 142 und Rotorpolschuhen 146 in analoger Form. Ein Signal, das indikativ für die Ausdehnung des Luftspaltes 154 ist, wird von dem Abstandssensor 214 an die Lagebestimmungseinheit 220 übertragen. In diesem Ausführungsbeispiel ist ein Kabel zur Übertragung des Messsignals vorgesehen, in anderen Ausführungsbeispielen kann das Messsignal auch kabellos übertragen werden oder die Luftspaltmesseinheit 210 mit der Lagebestimmungseinheit 220 als eine integrale Einheit ausgestaltet sein.

Die Lagebestimmungseinheit 220 weist in diesem Ausführungsbeispiel einen Inkrementalgeber 222, eine Referenzierungseinheit 224 und ein Funkkommunikationsmodul 226 auf. Die Lagebestimmungseinheit 220 ist in diesem Fall als Kiste oder Box innerhalb eines Gehäuses dargestellt, die in der Nähe der Luftspaltmesseinheit 210 ebenfalls zusammen mit dem Rotor montiert ist. Somit dreht sich die Luftspaltmesseinheit 210 und die Lagebestimmungseinheit 220, wenn sich die Rotorpolschuhe 146 bezüglich der Statorblechpakete 142 drehen. Anders ausgedrückt drehen sich die Statorblechplakete 142 relativ zu der Luftspaltmesseinheit 210 und der Lagebestimmungseinheit 220.

Der Inkrementalgeber 222 ist dazu eingerichtet, eine Lage der Lagebestimmungseinheit 220 anzugeben. Insbesondere ist der Inkrementalgeber 222 dazu eingerichtet, eine Lageveränderung über einen bestimmten Winkelbereich anzuzeigen. Vorzugsweise liegt die Auflösung des Inkrementalgebers 222 bei mindestens 100 Positionen je Umlauf. Somit ist eine hinreichende Messauflösung gegeben, die eine Positionierung des Stators 132 über den gesamten Umlauf sicherstellt.

Um eine absolute Position des Inkrementalgebers 222 anzugeben, ist die Referenzierungseinheit 224 vorgesehen. In Fig. 4 ist eine Anzeige der Referenzierungseinheit 224 gezeigt, die immer dann leuchtet, wenn sich der Inkrementalgeber 222 in einer 12-Uhr Position, das heißt, senkrecht nach oben, befindet. Beispielsweise kann die Referenzierungseinheit 224 dazu ein Pendel umfassen (nicht gezeigt), wobei die in Fig. 4 gezeigte Lampe der Referenzierungseinheit 224 dann leuchtet, wenn die Position der 12-Uhr Position entspricht, das heißt, wenn das Pendel senkrecht nach unten steht. Vorzugsweise wird der Inkrementalgeber 222 solange in einer Richtung gedreht, das heißt referenziert, bis die Lampe der Referenzierungseinheit 224 leuchtet. Wenn der Inkrementalgeber 222 in der 12-Uhr Position referenziert ist, ist, da die Intervalle des Inkrementalgebers 222 konstant sind und auch die Anzahl der Messpositionen je Umlauf bekannt ist, es möglich, dass mehrere Messungen, auch über verschiedene Tage und zwischen verschiedenen Windenergieanlagen miteinander vergleichbar sind, da sie dieselben absoluten Bezugspunkte enthalten.

Das Funkkommunikationsmodul 226 ist vorzugsweise ein W-LAN-Modul, das eine W-LAN-Verbindung oder sonstige drahtlose Kommunikationsverbindung mit einem Computer in dem Maschinenhaus der Windenergieanlage 100 ermöglicht. Ein Techniker, der die Einstellung des Stators 132 bzw. der Statorblechpakete 142 vornimmt, kann demnach außerhalb des sich drehenden Rotors mittels des Funkkommunikationsmoduls 226 die Daten über den Luftspalt 154 erhalten, auswerten und darauf entsprechend reagieren, beispielsweise durch Justieren des Stators 132. Die drahtlose Übertragung der Daten ermöglicht, dass kein Kabel aus dem Inneren des Rotors, was die Gefahr einer Kabelverdrillung birgt, nach außen zu führen ist.

In Fig. 4 nicht explizit gezeigt sind weitere Elemente der Lagebestimmungseinheit 220, nämlich die Recheneinheit, die beispielsweise das Funkkommunikationsmodul 226 umfasst, ein Analog-zu-Digitalwandler, der beispielsweise in dem Fall, dass es sich bei dem Sensor 214 um einen analogen Sensor handelt, das Abtastsignal des Sensors 214 in ein digitales Signal umwandelt, und wenigstens ein Netzteil, das eine Netzspannung in von der Lagebestimmungseinheit 220 benötigte Spannung oder von der Luftspaltmesseinheit 210 benötigte Spannung umwandelt. Die Lagebestimmungseinheit 220 kann ferner über eine Kalibriervorrichtung verfügen, mit der eine dem Fachmann bekannte Kalibrierung des Abstandssensors 214 möglich ist.

In diesem Ausführungsbeispiel ist die Lagebestimmungseinheit 220 mittels vier Kabelbindern an Streben, die zur Anbringung der Spinnerkappe vorgesehen ist, montiert. Die Streben befinden sich bereits üblicherweise in Windenergieanlagen 100, was den Montageaufwand geringhält. Die Anbringung mittels Kabelbindern ermöglicht ebenso eine schnelle Demontage der Lagebestimmungseinheit 220.

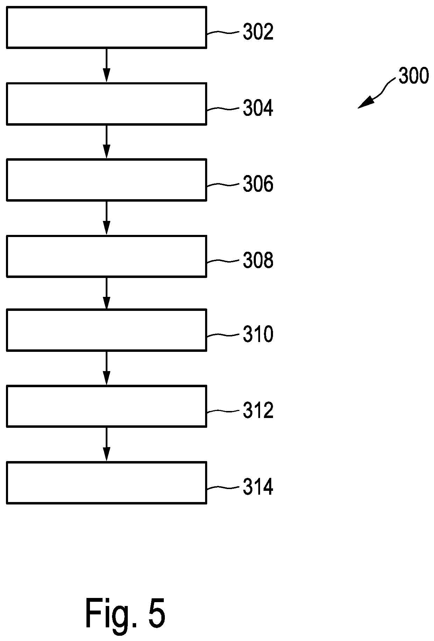

Fig. 5 zeigt schematisch und exemplarisch ein Flussdiagramm eines erfindungsgemäßen Messverfahrens 300 zum Vermessen eines Stators 132 einer Windenergieanlage 100. Das Messverfahren 300 umfasst einen Schritt 302 des Montierens einer Luftspaltmesseinheit 210, die eine Haltevorrichtung 212 und einen Abstandssensor 214 aufweist, an einem Rotor 134 der Windenergieanlage 100. Das Montieren in Schritt 302 erfolgt vorzugsweise während einer Zeit, in der die Windenergieanlage 100 festgesetzt ist, so dass sich der Rotor 134 nicht drehen kann. Ferner erfolgt das Montieren vorzugsweise stirnseitig, das heißt von der Seite der Windenergieanlage, die im Regelfall in den Wind gerichtet ist.

In Schritt 304 wird eine Lagebestimmungseinheit 220 an dem Rotor 134 der Windenergieanlage montiert. Beispielsweise wird die Lagebestimmungseinheit 220, ohne darauf beschränkt zu sein, mittels Kabelbindern an bereits in dem Rotor 134 vorhandenen Streben montiert.

In einem Schritt 306 wird die Lagebestimmungseinheit 220 mit einer Netzspannung verbunden. Die Netzspannung ist typischerweise in der Windenergieanlage 100 bereits verfügbar und somit kann die Lagebestimmungseinheit 220 in einfacher Weise verbunden werden.

In Schritt 308 wird der Abstandssensor 214 kalibriert. Beispielsweise erfolgt der Schritt des Kalibrierens derart, dass über eine Anzeige auf der Lagebestimmungseinheit 220, die den analogen Abtastwert des Abstandssensors 214 anzeigt, die von dem Abstandssensor 214 erzeugte Spannung derart verändert wird, dass der angezeigte Messwert dem Abstand entspricht. Dies ist nur ein Beispiel und weitere mögliche Kalibrierungsverfahren können statt dem beispielhaft beschriebenen eingesetzt werden.

In Schritt 310 wird der Inkrementalgeber 222 zur absoluten Lagebestimmung während eines Umlaufs referenziert. Die Referenzierung erfolgt vorzugsweise mittels der Referenzierungseinheit 224. Durch das Referenzieren sind über mehrere Messungen, die beispielsweise zu unterschiedlichen Jahren durchgeführt werden, bzw. auch zwischen unterschiedlichen Windenergieanlagen, vergleichbare Messungen möglich.

Schritt 312 betrifft das eigentliche Erfassen eines Signals des Abstandssensors 214, das für eine Ausdehnung des Luftspalts 154 zwischen Stator 132 und Rotor 134 indikativ ist, mittels der Lagebestimmungseinheit 220 während einer Drehung des Rotors 134 an mehreren Umlaufpositionen. Das Signal des Abstandssensors 214 wird erfasst, während sich der Rotor 134 um den Stator 132 dreht. Der Rotor 134 muss nicht zur Durchführung einzelner Messungen angehalten werden, und die Messung kann ohne Mehraufwand beliebig häufig wiederholt werden.

In Schritt 314 werden die in Schritt 312 erfassten Signale per W-LAN oder mittels eines anderen Funkübertragungsprotokolls übertragen. Eine Auswertung der Signale ist demnach außerhalb des Rotors, insbesondere in einem sich nicht rotierenden Bereich des Maschinenhauses, einfach möglich. Ein Techniker kann die erfassten Signale somit beinahe in Echtzeit auswerten und gegebenenfalls Anpassungen des Stators 132 vornehmen.

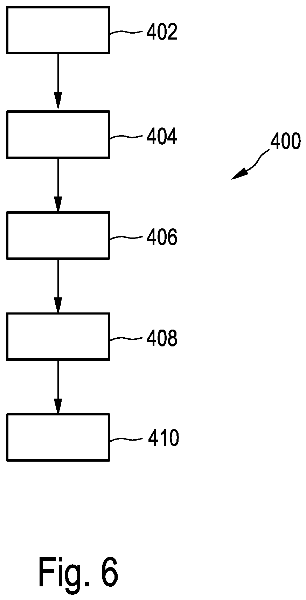

Fig. 6 zeigt schematisch und exemplarisch ein Flussdiagramm eines erfindungsgemäßen Messverfahrens 400 zum Vermessen eines Rotors 134 einer Windenergieanlage 100. Das Messverfahren 400 umfasst einen Schritt 402 des Montierens einer Luftspaltmesseinheit 210, die eine Haltevorrichtung 212 und einen Abstandssensor 214 aufweist, an einem Stator 132 der Windenergieanlage 100. Das Montieren in Schritt 302 erfolgt vorzugsweise während einer Zeit, in der die Windenergieanlage 100 festgesetzt ist, so dass sich der Rotor 134 nicht drehen kann. Ferner erfolgt das Montieren vorzugsweise stirnseitig, das heißt von der Seite der Windenergieanlage, die im Regelfall in den Wind gerichtet ist. Alternativ oder zusätzlich, insbesondere zusätzlich, erfolgt das Montieren auch gehäuseseitig, also auf der dem Wind abgewandten Seite des Rotors bzw. Generators.

In Schritt 404 wird ein Signal des Abstandsensors 214, das für eine Ausdehnung eines Luftspalts 154 zwischen Stator 132 und Rotor 134 indikativ ist, während einer Drehung des Rotors 134 an mehreren Umlaufpositionen erfasst.

In Schritt 406 werden Übergängen zwischen Polschuhen des Rotors 134 aus dem Signal des Abstandssensors 214 bestimmt. Der erfasste Abstand erreicht in dem Übergang zwischen zwei Polschuhen einen deutlich größeren Wert als im Bereich der Polschuhe, was das Bestimmen des Übergangs ermöglicht.

In Schritt 408 wird ein Abstandswert zwischen Stator 132 und Rotor 134 je Polschuh zwischen je zwei benachbarten der bestimmten Übergänge bestimmt. Insbesondere wird das Minimum des Signals des Abstandssensors 214 dafür herangezogen, obwohl auch andere Verfahren, beispielsweise eine Mittelwertbestimmung, möglich sind.

In Schritt 410 wird eine Rundheit des Rotors 134 basierend auf dem je Polschuh bestimmten Abstandswert ausgewertet. Gegebenenfalls sind bei festgestellten Unrundheiten Anpassungen durchzuführen.

Obwohl die Schritte in einer bestimmten Reihenfolge in Fig. 5 bzw. Fig. 6 gezeigt sind, so ist dadurch keine notwendige zeitliche Abfolge impliziert, vielmehr können einige, mehrere oder alle der Schritte in anderer Reihenfolge oder auch gleichzeitig ausgeführt werden.

Obwohl die Windenergieanlagen in dem Ausführungsbeispiel als Innenläufer dargestellt sind, lässt sich das erfindungsgemäße Messsystem und Messverfahren analog und ebenso vorteilhaft mit Außenläufern einsetzen.

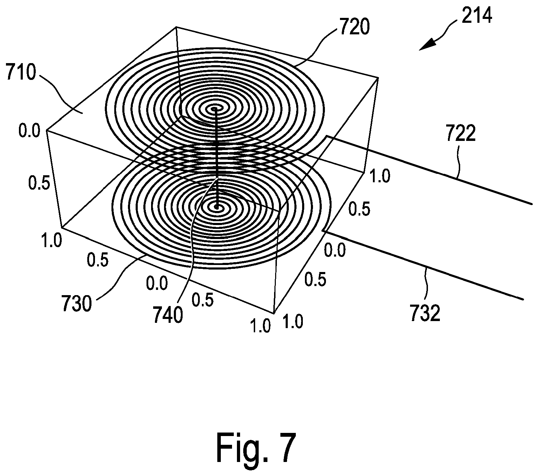

Fig. 7 zeigt schematisch und exemplarisch ein Ausführungsbeispiel eines Abstandssensors 214. Der Abstandssensor 214 ist in diesem Ausführungsbeispiel als eine Folie 710 ausgestaltet, die vorzugsweise auf einer ihrer beiden Seiten selbstklebend ausgeführt ist, um ein einfaches Einlegen beispielsweise in dem Luftspalt zu ermöglichen. Typische Foliendicken sind im Bereich von 0,1 mm, wobei auch dickere oder dünnere Folien möglich sind.

Die Folie 710 weist auf ihrer Vorderseite eine spiralförmige Leiterbahn 720 und auf ihrer Rückseite eine weitere spiralförmige Leiterbahn 730 auf. Die Spiralrichtung der Leiterbahn 730 ist vorzugsweise umgekehrt zu der der Spirale 720. In anderen Ausführungsbeispielen kann die Spirale 720 und/oder die Spirale 730 auch rechteckig oder mit anderen Geometrien ausführt sein, um vorzugsweise die volle Statorzahnbreite im Luftspalt abzudecken.

In etwa in der Mitte der Folie 710 sind die Spirale 720 und die Spirale 730 über eine Verbindung 740, die beispielsweise als Loch mit einer Lötstelle ausgestaltet ist, verbunden. Somit kann der Abstandssensor 214 über eine Anschlussleitung 722, die an die erste Spirale 720 angeschlossen ist, und eine zweite Anschlussleitung 732, die an die zweite Spirale 730 angeschlossen ist, verbunden werden.

Der in Fig. 7 gezeigte Abstandssensor 214 kann, wie oben beschrieben, nicht nur auf den Stator geklebt werden, um den Rotor zu vermessen, sondern auch auf den Rotor geklebt werden, um die Statorrundheit zu vermessen. Vorzugsweise können insgesamt vier derartige Abstandssensoren 214 eingesetzt werden, wobei jeweils zwei auf dem Stator und zwei auf dem Rotor, davon jeweils einer spinnerseitig und einer maschinenhausseitig, die Unrundheit und Konizität vermessen.

## Patentansprüche

1. Messsystem (200) zum Vermessen eines Stators (132) einer getriebelosen Windenergieanlage (100), wobei das Messsystem (100) eine Luftspaltmesseinheit (210) und eine Lagebestimmungseinheit (220) aufweist,
wobei die Luftspaltmesseinheit (210) eine Haltevorrichtung (212) und einen Abstandssensor (214) aufweist, wobei die Haltevorrichtung (212) dazu eingerichtet ist, die Luftspaltmesseinheit (210) reversibel an einem Rotor (132) der Windenergieanlage (100) zu montieren,
wobei der Abstandsensor (214) dazu eingerichtet ist, ein Signal bereitzustellen, das für eine Ausdehnung eines Luftspalts (154) zwischen Stator (132) und Rotor (134) indikativ ist,
**dadurch gekennzeichnet, dass** die Lagebestimmungseinheit (220) dazu eingerichtet ist, reversibel an dem Rotor (134) der Windenergieanlage (100) montiert zu werden und ein Signal bereitzustellen, das für eine Position der Lagebestimmungseinheit (220) in Umlaufrichtung des Rotors (134) indikativ ist,
wobei das Messsystem (100) dazu eingerichtet ist, Signale des Abstandssensors (214) und der Lagebestimmungseinheit (220) während einer Drehung des Rotors (134) an mehreren Umlaufpositionen zu erfassen,
wobei die Lagebestimmungseinheit (220) ein Gyroskop oder einen Inkrementalgeber (222) aufweist, das bzw. der dazu eingerichtet ist, ein Signal je bestimmter Winkeländerung des Rotors (132) bereitzustellen,
wobei die Haltevorrichtung (212) eine Magnetfolie umfasst, wobei die Luftspaltmesseinheit (210) dazu eingerichtet ist, in dem Luftspalt (154), insbesondere auf einem Polschuh des Rotors (132), montiert zu werden,
wobei die Lagebestimmungseinheit (220) von einem Gehäuse umfasst ist, das einen Magneten umfasst, wobei das Gehäuse mittels des Magneten an einem magnetischen Teil des Rotors (134) lösbar montierbar ist.

2. Messsystem (200) nach Anspruch 1, wobei der Inkrementalgeber (222) eine Auflösung von mindestens 100 Positionen je Umlauf aufweist.

3. Messsystem (200) nach Anspruch 1, wobei die Lagebestimmungseinheit (220) eine Referenzierungseinheit (224) zur Referenzierung des Inkrementalgebers (222) aufweist.

4. Messsystem (200) nach einem der vorstehenden Ansprüche, wobei das Gehäuse dazu eingerichtet ist, an Streben für eine Spinnerkappe der Windenergieanlage (100) montiert zu werden.

5. Messsystem (200) nach einem der vorstehenden Ansprüche, wobei die Lagebestimmungseinheit (220) ein Funkkommunikationsmodul (226), insbesondere ein W-LAN-Modul, aufweist.

6. Messsystem (200) nach einem der vorstehenden Ansprüche, wobei der Abstandssensor (214) ein Tastblech und/oder einen kapazitiven Flachsensor aufweist, das dazu eingerichtet ist, im montierten Zustand eine Innenseite des Stators (132) abzutasten.

7. Messsystem (200) nach einem der vorstehenden Ansprüche, wobei der Abstandssensor (214) eine Messgenauigkeit von 0,5 mm oder besser ermöglicht.

8. Messsystem (200) nach einem der vorstehenden Ansprüche, wobei der Abstandssensor (214) ein analoges Abtastsignal bereitstellt und die Lagebestimmungseinheit (220) einen Analog- zu Digital-Wandler aufweist, der dazu eingerichtet ist, das Abtastsignal zu digitalisieren.

9. Messsystem (200) nach einem der vorstehenden Ansprüche, wobei die Lagebestimmungseinheit (220) einen Transformator aufweist, damit die Lagebestimmungseinheit (220) direkt an die Netzspannung anschließbar ist.

10. Messsystem (200) nach einem der vorstehenden Ansprüche, wobei das Messsystem (200) eine erste und eine zweite Luftspaltmesseinheit (210) aufweist, wobei die erste Luftspaltmesseinheit (210) zur Montage in Axialrichtung vor dem Rotor (134) und die zweite Luftspaltmesseinheit zur Montage in Axial-richtung hinter dem Rotor eingerichtet ist.

11. Messverfahren (300) zum Vermessen eines Stators einer getriebelosen Windenergieanlage, wobei das Messverfahren umfasst:
reversibles Montieren (302) einer Luftspaltmesseinheit (210), die eine Haltevorrichtung (212) und einen Abstandssensor (214) aufweist, an einem Rotor (134) der Windenergieanlage (100),
wobei das Messverfahren **gekennzeichnet ist durch** die Schritte:
reversibles Montieren (304) einer Lagebestimmungseinheit (220) an dem Rotor (134) der Windenergieanlage (100),
Erfassen (312) eines Signals des Abstandsensors (214), das für eine Ausdehnung eines Luftspalts (154) zwischen Stator (132) und Rotor (134) indikativ ist, mittels der Lagebestimmungseinheit (220) während einer Drehung des Rotors (134) an mehreren Umlaufpositionen,
wobei die Lagebestimmungseinheit (220) ein Gyroskop oder einen Inkrementalgeber (222) aufweist, das bzw. der dazu eingerichtet ist, ein Signal je bestimmter Winkeländerung des Rotors (132) bereitzustellen,
wobei die Haltevorrichtung (212) eine Magnetfolie umfasst, wobei die Luftspaltmesseinheit (210) dazu eingerichtet ist, in dem Luftspalt (154), insbesondere auf einem Polschuh des Rotors (132), montiert zu werden,
wobei die Lagebestimmungseinheit (220) von einem Gehäuse umfasst ist, das einen Magneten umfasst, wobei das Gehäuse mittels des Magneten an einem magnetischen Teil des Rotors (134) lösbar montierbar ist.

12. Messverfahren (300) nach Anspruch 11, das weiter wenigstens einen der folgenden Schritte umfasst:
- Verbinden (306) der Lagebestimmungseinheit (220) mit einer Netzspannung,
- Kalibrieren (308) des Abstandssensors (214),
- Referenzieren (310) eines Inkrementalgebers (222) zur absoluten Lagebestimmung während eines Umlaufs,
- Übertragen (314) der erfassten Signale per W-LAN.

13. Messverfahren (400) zum Vermessen eines Rotors (134) einer getriebelosen Windenergieanlage, wobei das Messverfahren die folgenden Schritte umfasst:
- reversibles Montieren (402) einer Luftspaltmesseinheit (210), die eine Haltevorrichtung (212) und einen Abstandssensor (214) aufweist, an einem Stator (132) der Windenergieanlage (100),
- Erfassen (404) eines Signals des Abstandsensors (214), das für eine Ausdehnung eines Luftspalts (154) zwischen Stator (132) und Rotor (134) indikativ ist während einer Drehung des Rotors (134) an mehreren Umlaufpositionen,
- Bestimmen (406) von Übergängen zwischen Polschuhen des Rotors (134) aus dem Signal des Abstandssensors (214),
- Bestimmen (408) eines Abstandswertes zwischen Stator (132) und Rotor (134) je Polschuh zwischen je zwei benachbarten der bestimmten Übergänge, insbesondere als Minimum des Signals des Abstandssensors (214), und
- Auswerten (410) einer Rundheit des Rotors (134) basierend auf dem je Polschuh bestimmten Abstandswert,
**dadurch gekennzeichnet, dass** eine Lagebestimmungseinheit (220) reversibel an dem Rotor (134) montiert wird, wobei die Lagebestimmungseinheit (220) ein Gyroskop oder einen Inkrementalgeber (222) aufweist, das bzw. der dazu eingerichtet ist, ein Signal je bestimmter Winkeländerung des Rotors (132) bereitzustellen,
wobei die Haltevorrichtung (212) eine Magnetfolie umfasst, wobei die Luftspaltmesseinheit (210) dazu eingerichtet ist, in dem Luftspalt (154)
montiert zu werden,
wobei die Lagebestimmungseinheit (220) von einem Gehäuse umfasst ist, das einen Magneten umfasst, wobei das Gehäuse mittels des Magneten an einem magnetischen Teil des Rotors (134) lösbar montierbar ist.

14. Verfahren zum Montieren einer Windenergieanlage (100), umfassend ein Durchführen eines Messverfahrens (300) nach einem der Ansprüche 11 bis 13 und weiter ein Justieren des Stators (132) und/oder des Rotors (134) an einer Position, für die ein abweichender Wert des Luftspaltes (154) gemessen wurde.

## Claims

1. A measuring system (200) for measuring a stator (132) of a gearless wind power installation (100), wherein the measuring system (100) has an air gap measuring unit (210) and a position determination unit (220),
wherein the air gap measuring unit (210) has a holding apparatus (212) and a distance sensor (214), wherein the holding apparatus (212) is set up to reversibly mount the air gap measuring unit (210) on a rotor (132) of the wind power installation (100),
wherein the distance sensor (214) is set up to provide a signal which is indicative of an extent of an air gap (154) between the stator (132) and the rotor (134),
**characterized by** that the position determination unit (220) is set up to be reversibly mounted on the rotor (134) of the wind power installation (100) and to provide a signal which is indicative of a position of the position determination unit (220) in the revolution direction of the rotor (134),
wherein the measuring system (100) is set up to capture signals from the distance sensor (214) and from the position determination unit (220) during a rotation of the rotor (134) at a plurality of revolution positions,
wherein the position determination unit (220) has a gyroscope or an incremental encoder (222) which is set up to provide a signal for each determined angle change of the rotor (132)
wherein the holding apparatus (212) comprises a magnetic film, wherein the air gap measuring unit (210) is set up to be mounted in the air gap (154), in particular on a pole shoe of the rotor (132),
wherein the position determination unit (220) is comprised in a housing comprising a magnet, wherein the housing is releasably mounted on a magnetic part of the rotor (134) by means of the magnet.

2. The measuring system (200) as claimed in claim 1, wherein the incremental encoder (222) has a resolution of at least 100 positions per revolution.

3. The measuring system (200) as claimed in claim 1, wherein the position determination unit (220) has a referencing unit (224) for referencing the incremental encoder (222).

4. The measuring system (200) as claimed in one of the preceding claims, wherein the housing is set up to be mounted on struts for a spinner cap of the wind power installation (100).

5. The measuring system (200) as claimed in one of the preceding claims, wherein the position determination unit (220) has a radio communication module (226), in particular a WLAN module.

6. The measuring system (200) as claimed in one of the preceding claims, wherein the distance sensor (214) has a sensing plate and/or a capacitive flat sensor which is set up to scan an inner side of the stator (132) in the mounted state.

7. The measuring system (200) as claimed in one of the preceding claims, wherein the distance sensor (214) enables a measurement accuracy of 0.5 mm or better.

8. The measuring system (200) as claimed in one of the preceding claims, wherein the distance sensor (214) provides an analog scanning signal, and the position determination unit (220) has an analog/digital converter which is set up to digitize the scanning signal.

9. The measuring system (200) as claimed in one of the preceding claims, wherein the position determination unit (220) has a transformer so that the position determination unit (220) can be directly connected to the grid voltage.

10. The measuring system (200) as claimed in one of the preceding claims, wherein the measuring system (200) has a first and a second air gap measuring unit (210), wherein the first air gap measuring unit (210) is set up for mounting in front of the rotor (134) in the axial direction and the second air gap measuring unit is set up for mounting behind the rotor in the axial direction.

11. A measuring method (300) for measuring a stator of a gearless wind power installation, wherein the measuring method comprises:
reversibly mounting (302) an air gap measuring unit (210), which has a holding apparatus (212) and a distance sensor (214), on a rotor (134) of the wind power installation (100),
wherein the measuring method is **characterized by** the steps of:
reversibly mounting (304) a position determination unit (220) on the rotor (134) of the wind power installation (100),
capturing (312) a signal from the distance sensor (214), which is indicative of an extent of an air gap (154) between the stator (132) and the rotor (134), by means of the position determination unit (220) during a rotation of the rotor (134) at a plurality of revolution positions,
wherein the position determination unit (220) has a gyroscope or an incremental encoder (222) which is set up to provide a signal for each determined angle change of the rotor (132)
wherein the holding apparatus (212) comprises a magnetic film, wherein the air gap measuring unit (210) is set up to be mounted in the air gap (154), in particular on a pole shoe of the rotor (132),
wherein the position determination unit (220) is comprised in a housing comprising a magnet, wherein the housing is releasably mounted on a magnetic part of the rotor (134) by means of the magnet.

12. The measuring method (300) as claimed in claim 11, which also comprises at least one of the following steps of:
- connecting (306) the position determination unit (220) to a grid voltage,
- calibrating (308) the distance sensor (214),
- referencing (310) an incremental encoder (222) for absolute position determination during a revolution,
- transmitting (314) the captured signals by WLAN.

13. A measuring method (400) for measuring a rotor (134) of a gearless wind power installation, wherein the measuring method comprises the following steps of:
- reversibly mounting (402) an air gap measuring unit (210), which has a holding apparatus (212) and a distance sensor (214), on a stator (132) of the wind power installation (100),
- capturing (404) a signal from the distance sensor (214), which is indicative of an extent of an air gap (154) between the stator (132) and the rotor (134), during a rotation of the rotor (134) at a plurality of revolution positions,
- determining (406) junctions between pole shoes of the rotor (134) from the signal from the distance sensor (214),
- determining (408) a distance value between the stator (132) and the rotor (134) for each pole shoe between each two adjacent junctions of the determined junctions, in particular as a minimum of the signal from the distance sensor (214), and
- evaluating (410) a roundness of the rotor (134) on the basis of the distance value determined for each pole shoe
**characterized by** that a position determination unit (220) is reversibly mounted on the rotor (134), wherein the position determination unit (220) has a gyroscope or an incremental encoder (222) which is set up to provide a signal for each determined angle change of the rotor (132)
wherein the holding apparatus (212) comprises a magnetic film, wherein the air gap measuring unit (210) is set up to be mounted in the air gap (154),
wherein the position determination unit (220) is comprised in a housing comprising a magnet, wherein the housing is releasably mounted on a magnetic part of the rotor (134) by means of the magnet.

14. A method for assembling a wind power installation (100), comprising carrying out a measuring method (300) as claimed in one of claims 11 to 13 and also adjusting the stator (132) and/or the rotor (134) at a position for which a differing value of the air gap (154) was measured.

## Revendications

1. Système de mesure (200) pour mesurer un stator (132) d'une éolienne sans réducteur (100), dans lequel le système de mesure (100) présente une unité de mesure d'entrefer (210) et une unité de détermination de position (220),
dans lequel l'unité de mesure d'entrefer (210) présente un dispositif de maintien (212) et un capteur de distance (214), dans lequel le dispositif de maintien (212) est mis au point pour monter de manière réversible l'unité de mesure d'entrefer (210) sur un rotor (132) de l'éolienne (100),
dans lequel le capteur de distance (214) est mis au point pour fournir un signal qui indique une dilatation d'un entrefer (154) entre le stator (132) et le rotor (134),
**caractérisé par le fait que** l'unité de détermination de position (220) est mise au point pour être montée de manière réversible sur le rotor (134) de l'éolienne (100) et pour fournir un signal qui indique une position de l'unité de détermination de position (220) dans la direction de rotation du rotor (134),
dans lequel le système de mesure (100) est mis au point pour détecter des signaux du capteur de distance (214) et de l'unité de détermination de position (220) pendant une rotation du rotor (134) sur plusieurs positions périphériques,
dans lequel l'unité de détermination de position (220) comprend un gyroscope ou un codeur incrémental (222) qui est mis au point pour fournir un signal pour chaque variation angulaire déterminée du rotor (132),
dans lequel le dispositif de maintien (212) comprend une feuille magnétique, dans lequel l'unité de mesure d'entrefer (210) est mise au point pour être montée dans l'entrefer (154), en particulier sur une pièce polaire du rotor (132)
dans lequel l'unité de détermination de position (220) est intégrée dans un boîtier, qui comprend un aimant, dans lequel le boîtier peut être monté de manière amovible au moyen de l'aimant sur une partie magnétique du rotor (134).

2. Système de mesure (200) selon la revendication 1, dans lequel le codeur incrémental (222) présente une résolution d'au moins 100 positions par rotation.

3. Système de mesure (200) selon la revendication 1, dans lequel l'unité de détermination de position (220) présente une unité de référencement (224) pour référencer le codeur incrémental (222).

4. Système de mesure (200) selon l'une quelconque des revendications précédentes, dans lequel le boîtier est mis au point pour être monté sur des entretoises pour un cône de protection de l'éolienne (100).

5. Système de mesure (200) selon l'une quelconque des revendications précédentes, dans lequel l'unité de détermination de position (220) présente un module de communication radio (226), en particulier un module W-LAN.

6. Système de mesure (200) selon l'une quelconque des revendications précédentes, dans lequel le capteur de distance (214) présente une tôle de balayage et/ou un capteur plat capacitif qui sont mis au point pour balayer une face intérieure du stator (132), à l'état monté.

7. Système de mesure (200) selon l'une quelconque des revendications précédentes, dans lequel le capteur de distance (214) permet une précision de mesure de 0,5 mm ou mieux.

8. Système de mesure (200) selon l'une quelconque des revendications précédentes, dans lequel le capteur de distance (214) fournit un signal de balayage analogique et l'unité de détermination de position (220) présente un convertisseur analogique-numérique qui est mis au point pour numériser le signal de balayage.

9. Système de mesure (200) selon l'une quelconque des revendications précédentes, dans lequel l'unité de détermination de position (220) présente un transformateur pour que l'unité de détermination de position (220) puisse être raccordée directement à la tension de secteur.

10. Système de mesure (200) selon l'une quelconque des revendications précédentes, dans lequel le système de mesure (200) présente une première et une deuxième unité de mesure d'entrefer (210), dans lequel la première unité de mesure d'entrefer (210) est mise au point pour être montée axialement devant le rotor (134) et la deuxième unité de mesure d'entrefer est mise au point pour être montée axialement derrière le rotor.

11. Procédé de mesure (300) pour mesurer un stator d'une éolienne sans réducteur, dans lequel le procédé de mesure comprend :
le montage réversible (302) d'une unité de mesure d'entrefer (210), qui présente un dispositif de maintien (212) et un capteur de distance (214), sur un rotor (134) de l'éolienne (100),
dans lequel le procédé de mesure est **caractérisé par** les étapes :
de montage réversible (304) d'une unité de détermination de position (220) sur le rotor (134) de l'éolienne (100),
de détection (312) d'un signal du capteur de distance (214) qui indique une dilatation d'un entrefer (154) entre le stator (132) et le rotor (134) au moyen de l'unité de détermination de position (220) pendant une rotation du rotor (134) sur plusieurs positions de rotation,
dans lequel l'unité de détermination de position (220) comprend un gyroscope ou un codeur incrémental (222) qui est mis au point pour fournir un signal pour chaque variation angulaire déterminée du rotor (132),
dans lequel le dispositif de maintien (212) comprend une feuille magnétique, dans lequel l'unité de mesure d'entrefer (210) est mise au point pour être montée dans l'entrefer (154), en particulier sur une pièce polaire du rotor (132)
dans lequel l'unité de détermination de position (220) est intégrée dans un boîtier, qui comprend un aimant, dans lequel le boîtier peut être monté de manière amovible au moyen de l'aimant sur une partie magnétique du rotor (134).

12. Procédé de mesure (300) selon la revendication 11, qui comprend en outre au moins une des étapes suivantes :
- la liaison (306) de l'unité de détermination de position (220) à une tension de secteur,
- l'étalonnage (308) du capteur de distance (214),
- le référencement (310) d'un codeur incrémental (222) pour la détermination de position absolue pendant une rotation,
- la transmission (314) des signaux détectés par W-LAN.

13. Procédé de mesure (400) pour mesurer un rotor (134) d'une éolienne sans réducteur, dans lequel le procédé de mesure comprend les étapes suivantes :
- le montage réversible (402) d'une unité de mesure d'entrefer (210), qui présente un dispositif de maintien (212) et un capteur de distance (214), sur un stator (132) de l'éolienne (100),
- la détection (404) d'un signal du capteur de distance (214) qui indique une dilatation d'un entrefer (154) entre le stator (132) et le rotor (134) pendant une rotation du rotor (134) à plusieurs positions de rotation,
- la détermination (406) de transitions entre des pièces polaires du rotor (134) à partir du signal du capteur de distance (214),
- la détermination (408) d'une valeur de distance entre le stator (132) et le rotor (134) pour chaque pièce polaire entre deux transitions adjacentes déterminées, en particulier en tant que minimum du signal du capteur de distance (214), et
- l'évaluation (410) d'une circularité du rotor (134) sur la base de la valeur de distance déterminée par pièce polaire,
**caractérisé en ce qu'**une unité de détermination de position (220) est montée de manière réversible sur le rotor (134), dans lequel l'unité de détermination de position (220) présente un gyroscope ou un codeur incrémental (222), qui est mis au point pour fournir un signal à chaque variation angulaire déterminée du rotor (132),
dans lequel le dispositif de maintien (212) comprend un film magnétique, dans lequel l'unité de mesure d'entrefer (210) est mise au point pour être montée dans l'entrefer (154),
dans lequel l'unité de détermination de position (220) est intégrée dans un boîtier, qui comprend un aimant, dans lequel le boîtier peut être monté de manière amovible au moyen de l'aimant sur une partie magnétique du rotor (134).

14. Procédé de montage d'une éolienne (100), comprenant une réalisation d'un procédé de mesure (300) selon l'une quelconque des revendications 11 à 13 et, en outre, un réglage du stator (132) et/ou du rotor (134) sur une position pour laquelle une valeur présentant un écart de l'entrefer (154) a été mesurée.
